# EUROPÄISCHE PATENTANMELDUNG

(11) **EP 2 933 889 A1**
(43) Veröffentlichungstag der Anmeldung: **21.10.2015**
(21) Anmeldenummer: 14305553.1
(22) Anmeldetag: 15.04.2014
(51) Int. Cl.: H02G 3/16, B60R 16/023, B60R 16/02, H02G 3/08

(54) **Vorrichtung zum Aufteilen eines Bündels von isolierten elektrischen Leitern**

(71) Anmelder: Nexans, 75008 Paris (FR)
(72) Erfinder: Kreuzer, Thomas, 92660 Neustadt (DE); Linner, Andreas, 81929 München (DE); Fischer, Roland, 92708 Mantel (DE); Dittrich, Jürgen, 92665 Altenstadt (DE)
(74) Vertreter: Peguet, Wilfried

(57) **Zusammenfassung**

Es wird eine Vorrichtung zum Aufteilen mindestens eines Bündels von isolierten elektrischen Leitern, in dem eine Vielzahl von Leitern zu einer Einheit zusammengefaßt ist, auf mindestens zwei Teilstränge, in denen jeweils ein Teil der Leiter des Bündels zusammengefaßt ist, angegeben. Sie weist ein aus mindestens zwei miteinander zu verbindenden Teilen bestehendes Gehäuse aus Isoliermaterial auf, in dem Öffnungen zum Durchführen des Bündels und der Teilstränge vorhanden sind. In dem Gehäuse ist ein aus Metall bestehendes Kontaktteil angebracht ist, das nach außen über das Profil des Gehäuses hinausragt und das an seinem aus dem Gehäuse herausragenden Ende mindestens ein Durchgangsloch sowie an seinem in dem Gehäuse liegenden Ende ein Anschlußelement zum elektrisch leitenden Anschließen eines Leiters hat. In Montageposition ist mindestens eine elektrische Einzelleitung durch eine der Öffnungen in das Gehäuse hineingeführt, die mindestens zwei Leiter aufweist, von denen einer an das Kontaktteil elektrisch leitend angeschlossen ist, während der andere Leiter der Einzelleitung durch eine Öffnung aus dem Gehäuse herausgeführt ist.

## Beschreibung

Die Erfindung bezieht sich auf eine Vorrichtung zum Aufteilen mindestens eines Bündels von isolierten elektrischen Leitern, in dem eine Vielzahl von Leitern zu einer Einheit zusammengefaßt ist, auf mindestens zwei Teilstränge, in denen jeweils ein Teil der Leiter des Bündels zusammengefaßt ist, welche ein aus mindestens zwei miteinander zu verbindenden Teilen bestehendes Gehäuse aus Isoliermaterial aufweist, in dem Öffnungen zum Durchführen des Bündels und der Teilstränge vorhanden sind.

Derartige Vorrichtungen sind bekannt. Sie werden seit Jahren weltweit eingesetzt. Eine entsprechende Vorrichtung kann bei allen elektrischen Geräten eingesetzt werden, bei denen isolierte elektrische Leiter, die in einem Bündel zu einer Einheit zusammengefaßt sind, in Teilstränge aufgeteilt werden, die zu einzelnen Verbrauchsstellen des jeweiligen Geräts führen. Solche Geräte sind beispielsweise Waschmaschinen, Geschirrspülmaschinen oder Schaltschränke. Ein bevorzugtes Einsatzgebiet, auf das sich auch die weiteren Ausführungen beziehen, sind Kraftfahrzeuge - im folgenden kurz "Fahrzeuge" genannt -, in denen Kabelbäume bzw. Kabelsätze angeordnet sind, welche dem erwähnten Bündel entsprechen. Die von dem Gehäuse der Vorrichtung ausgehenden Teilstränge führen zu unterschiedlichen elektrischen Verbrauchern eines Fahrzeugs. Neben den Kabelbäumen sind in einem modernen Fahrzeug auch Einzelleitungen vorhanden, die beispielsweise jeweils mit einem Sensor verbunden sind. Solche Sensoren dienen beispielsweise zur Überwachung der Nockenwelle oder der Kurbelwelle oder auch der ABS-Einrichtungen eines Fahrzeugs. Die Einzelleitungen werden unabhängig von den Kabelbäumen verlegt und auch mit einem Bezugspotential verbunden, insbesondere mit Erdpotential bzw. Masse.

Der Erfindung liegt die Aufgabe zugrunde, die eingangs geschilderte Vorrichtung so zu gestalten, daß der Anschluß von Einzelleitungen innerhalb eines Fahrzeugs vereinfacht werden kann.

Diese Aufgabe wird gemäß der Erfindung dadurch gelöst,
- daß in dem Gehäuse ein aus Metall bestehendes Kontaktteil angebracht ist, das nach außen über das Profil des Gehäuses hinausragt und das an seinem aus dem Gehäuse herausragenden Ende mindestens ein Durchgangsloch sowie an seinem in dem Gehäuse liegenden Ende ein Anschlußelement zum elektrisch leitenden Anschließen eines Leiters hat, und
- daß in Montageposition mindestens eine elektrische Einzelleitung durch eine der Öffnungen in das Gehäuse hineingeführt ist, die mindestens zwei Leiter aufweist, von denen einer an das Kontaktteil elektrisch leitend angeschlossen ist, während der andere Leiter der Einzelleitung durch eine Öffnung aus dem Gehäuse herausgeführt ist.

Diese Vorrichtung dient nicht nur zum Aufteilen der Leiter mindestens eines Bündels von Leitern, sondern gleichzeitig auch zur Aufnahme und Weiterleitung sowie zur Kontaktierung mindestens einer Einzelleitung, an deren freiem Ende mit Vorteil ein Sensor angebracht ist. Die Einzelleitung hat mindestens zwei Leiter, von denen einer in Montageposition an ein Bezugspotential angeschlossen ist, bei dem es sich mit Vorteil um Erdpotential bzw. Masse handelt, während der andere Leiter zu einer Überwachungseinheit bzw. Kontrolleinheit weitergeführt ist. Der mit dem Bezugspotential zu verbindende Leiter der Einzelleitung ist innerhalb des Gehäuses an das in demselben angebrachte Kontaktteil angeschlossen, und zwar über dessen Anschlußelement, das mit Vorteil als Crimpverbinder ausgeführt ist. Wenn das Gehäuse in Montageposition einschließlich seiner Öffnungen feuchtigkeitsdicht, insbesondere spritzwassergeschützt, verschlossen bzw. abgedichtet ist, dann ist auch die Verbindung des Leiters der Einzelleitung mit dem Kontaktteil feuchtigkeitsdicht abgedeckt und insbesondere gegen Spritzwasser geschützt. Bei der Montage eines mit dieser Vorrichtung ausgerüsteten Kabelbaums in einem Fahrzeug braucht nur das aus dem Gehäuse herausragende Kontaktteil an einem "Massepunkt" des Fahrzeugs befestigt zu werden. Die Einzelleitung bzw. der an derselben angebrachte Sensor sind dann auf einfache Art und Weise und ohne zusätzliche Arbeit "geerdet". Das Kontaktteil wird mit Vorteil mittels einer Schraube mit dem Massepunkt verbunden, welche durch das Durchgangsloch hindurch gesteckt und mit dem Massepunkt verschraubt wird.

Ein Ausführungsbeispiel des Erfindungsgegenstandes ist in den Zeichnungen dargestellt.

Es zeigen:
Fig. 1 eine Seitenansicht einer Vorrichtung nach der Erfindung in schematischer Darstellung.
Fig. 2 eine Draufsicht auf ein Unterteil der Vorrichtung nach Fig. 1 ebenfalls in schematischer Darstellung.
Fig. 3 ein in der Vorrichtung eingesetztes Kontaktteil in vergrößerter Darstellung.

Im Folgenden wird die Vorrichtung nach der Erfindung am Beispiel eines Kabelbaums für ein Fahrzeug beschrieben. Der Kabelbaum hat nur ein Bündel von Leitern die mittels der Vorrichtung aufgeteilt werden. Es könnten aber auch zwei oder mehr solche Bündel in dem Gehäuse der Vorrichtung aufgeteilt werden. Es ist außerdem nur eine Einzelleitung mit angeschlossenem Sensor dargestellt. Sie hat mit Vorteil zwei isolierte Leiter. Die Einzelleitung kann auch mehr als zwei Leiter aufweisen und es können auch mehr als eine Einzelleitung durch das Gehäuse der Vorrichtung geführt und mit dem Kontaktteil verbunden werden.

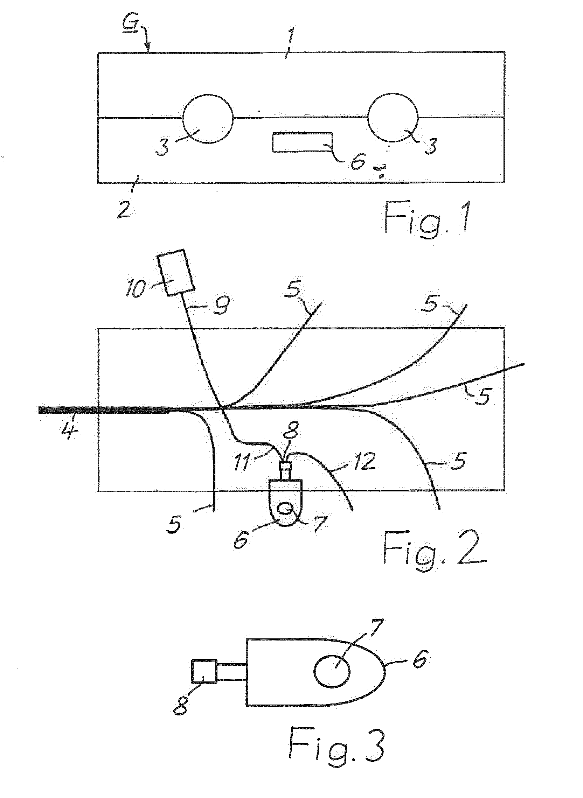

In Fig. 1 ist ein aus Isoliermaterial bestehendes Gehäuse G schematisch dargestellt, das im dargestellten Ausführungsbeispiel ein Oberteil 1 und ein Unterteil 2 ausweist. Oberteil 1 und Unterteil 2 sind in Montageposition mit Vorteil feuchtigkeitsdicht, insbesondere spritzwassergeschützt, miteinander verbunden. Das Gehäuse G kann auch aus mehr als zwei miteinander zu verbindenden Teilen aufgebaut sein.

Das Gehäuse G hat mehrere Öffnungen 3, durch welche elektrische Leiter hindurchgeführt werden können. In Fig. 1 sind zwei Öffnungen 3 eingezeichnet. In Montageposition sind alle Öffnungen 3 des Gehäuses G feuchtigkeitsdicht verschlossen.

Das Gehäuse G dient als Verteiler für die isolierten elektrischen Leiter eines Kabelbaums, der in einem Fahrzeug zu montieren ist. Dafür wird entsprechend der Darstellung in Fig. 2 durch eine der Öffnungen 3 des Gehäuses G ein Bündel 4 von Leitern in das Gehäuse G eingelegt. Das Bündel 4 ist als Hauptstrang zu betrachten, in dem alle Leiter zu einer Einheit zusammengefaßt sind, die auf Teilstränge 5 aufgeteilt werden sollen. Das Bündel 4 ist dementsprechend durch eine dickere Linie angedeutet, während die Teilstränge 5 als dünnere Linien eingezeichnet sind. Im dargestellten Ausführungsbeispiel ist das Bündel 4 auf fünf Teilstränge 5 aufgeteilt, die zu elektrischen Verbrauchern des Fahrzeugs führen.

In der Wandung des Unterteils 2 des Gehäuses G ist ein aus Metall, vorzugsweise aus Kupfer oder einer Kupferlegierung, bestehendes Kontaktteil 6 befestigt, das mit Vorteil als flacher Streifen ausgeführt sein kann. Das Kontaktelement 6 ragt mit einem Ende über das Profil des Gehäuses G hinaus. In diesem Ende des Kontaktteils 6 befindet sich im dorgstellten Ausführungsbeispiel ein Durchgangsloch 7. Es könnten auch zwei oder mehr Durchgangslöcher im Kontaktteil 6 angebracht sein. An dem in das Gehäuse G hineinragenden Ende hat das Kontaktteil 6 ein Anschlußelement 8 zum Anschließen eines elektrischen Leiters bzw. mehrerer Leiter. Das Anschlußelement 8 ist mit Vorteil als Crimpverbinder oder als Schweißverbinder ausgeführt.

In das Gehäuse G ist außer dem Bündel 4 eine Einzelleitung 9 durch eine der Öffnungen 3 eingeführt, die an ihrem freien Ende beispielsweise mit einem Sensor 10 verbunden ist. Die Einzelleitung 9 hat mindestens zwei Isolierte elektrische Leiter 11 und 12, von denen der Leiter 11 im Montagezustand an das Anschlußelement 8 des Kontaktteils 6 angeschlossen ist. Der Leiter 12 ist durch eine der Öffnungen 3 aus dem Gehäuse G herausgeführt. Er kann an eine Überwachungseinheit bzw. eine Kontrolleinheit angeschlossen sein.

Das Kontaktteil 6 kann mit seinem über das Profil des Gehäuses G hinausragenden Ende mit Vorteil in einer Erweiterung des Gehäuses G liegen, so daß es an seinen Seitenkanten vom Material des Gehäuses G umschlossen und in diesem über eine entsprechende Aufnahme fixiert ist.

Nach Einführung des Bündels 4 in das Unterteil 2 des Gehäuses G und Aufteilung desselben in die durch entsprechende Öffnungen 3 des Gehäuses G nach außen geführten Teilstränge 5 sowie Anordnung der Einzelleitung 9 mit Anschluß Ihres Leiters 10 an das Kontaktteil 6 wird das Gehäuse G mittels des Oberteils 1 verschlossen. Beide Teile werden insbesondere spritzwassergeschützt miteinander verbunden. Auch alle Öffnungen 3 werden feuchtigkeitsdicht abgedichtet. Damit ist insbesondere auch das Anschlußelement 8 des Kontaktteils 6 mit dem an dasselbe angeschlossenen Leiter 11 spritzwassergeschützt umschlossen.

Die Vorrichtung mit verschlossenem Gehäuse G bzw. ein mit derselben ausgerüsteter Kabelbaum sind damit vollständig aufgebaut. Bei der Montage der Vorrichtung bzw. des Kabelbaums wird das Kontaktteil 6 mittels einer Schraube auf einen Massepunkt eines Fahrzeugs aufgeschraubt. Der Sensor 10 ist dann ohne zusätzliche Arbeiten auf einfache Art und Weise geerdet.

## Patentansprüche

1. Vorrichtung zum Aufteilen mindestens eines Bündels von isolierten elektrischen Leitern, in dem eine Vielzahl von Leitern zu einer Einheit zusammengefaßt ist, auf mindestens zwei Teilstränge, in denen jeweils ein Teil der Leiter des Bündels zusammengefaßt ist, welche ein aus mindestens zwei miteinander zu verbindenden Teilen bestehendes Gehäuse aus Isoliermaterial aufweist, in dem Öffnungen zum Durchführen des Bündels und der Teilstränge vorhanden sind, **dadurch gekennzeichnet,**
- **daß** in dem Gehäuse (G) ein aus Metall bestehendes Kontaktteil (6) angebracht ist, das nach außen über das Profil des Gehäuses (G) hinausragt und das an seinem aus dem Gehäuse (G) herausragenden Ende mindestens ein Durchgangsloch (7) sowie an seinem in dem Gehäuse (G) liegenden Ende ein Anschlußelement (8) zum elektrisch leitenden Anschließen eines Leiters hat, und
- **daß** in Montageposition mindestens eine elektrische Einzelleitung (9) durch eine der Öffnungen (3) in das Gehäuse (G) hineingeführt ist, die mindestens zwei Leiter (11,12) aufweist, von denen einer an das Kontaktteil (6) elektrisch leitend angeschlossen ist, während der andere Leiter der Einzelleitung (9) durch eine Öffnung aus dem Gehäuse (G) herausgeführt ist.

2. Vorrichtung nach Anspruch 1, **dadurch gekennzeichnet, daß** das Kontaktteil (6) in einer Wandung des Gehäuses (G) befestigt ist.

3. Vorrichtung nach Anspruch 1 oder 2, **dadurch gekennzeichnet, daß** das Kontaktteil (6) mit seinem das Durchgangsloch (7) aufweisenden Ende in einer Erweiterung des Gehäuses (G) liegt und an seinen Seitenkanten vom Material desselben umschlossen ist.

4. Vorrichtung nach einem der Ansprüche 1 bis 3, **dadurch gekennzeichnet,**
- **daß** die Teile (1,2) des Gehäuses (G) in Montageposition feuchtigkeitsdicht, insbesondere spritzwassergeschützt, miteinander verbunden sind und
- **daß** die Öffnungen (3) des Gehäuses (G) mit darin liegenden Leitern in Montageposition feuchtigkeitsdicht, insbesondere spritzwassergeschützt, abgedichtet sind.

5. Vorrichtung nach einem der Ansprüche 1 bis 4, **dadurch gekennzeichnet, daß** das Kontaktteil (6) für den an dasselbe angeschlossenen Leiter als Verbindungselement zu einem Bezugspotential dient, insbesondere zu Erd potential.
